Europäisches Patentamt

European Patent Office

Office européen des brevets

(19)

(11) Numéro de publication : **0 497 684 A1**

# (12) DEMANDE DE BREVET EUROPEEN

(21) Numéro de dépôt : **92400213.2**

(51) Int. Cl.⁵ : **H01S 3/03**

(22) Date de dépôt : **28.01.92**

(30) Priorité : **30.01.91 FR 9101049**

(43) Date de publication de la demande :
**05.08.92 Bulletin 92/32**

(84) Etats contractants désignés :
**ES FR GB IT**

(71) Demandeur : **COMMISSARIAT A L'ENERGIE
ATOMIQUE
31-33, rue de la Fédération
F-75015 Paris (FR)**

(72) Inventeur : **Gidon, Serge
Route de Nyons
F-26790 Tulette (FR)**
Inventeur : **Vulliez, Pierre
Route du Val des Nymphes
F-26700 La Garde Adhemar (FR)**
Inventeur : **Hennevin, Bernard
15, Allée des Glycines
F-69150 Décines (FR)**

(74) Mandataire : **Mongrédien, André et al
c/o BREVATOME 25, rue de Ponthieu
F-75008 Paris (FR)**

(54) **Source d'alimentation électrique pour laser.**

(57)   Pour un laser à vapeur métallique, un module de chauffage (44) relié aux électrodes (16, 18) d'une enceinte (12) contenant le métal, délivre une impulsion électrique pour la vaporisation du métal ; un module d'excitation (14) délivre une impulsion électrique pour l'excitation de la vapeur métallique ; le fonctionnement du laser étant répétitif, l'impulsion d'excitation préionise le métal en vue du déclenchement de l'impulsion de chauffage.

FIG. 1

EP 0 497 684 A1

La présente invention concerne une source d'alimentation électrique pour laser. Elle s'applique notamment au chauffage et à l'excitation du matériau actif de différents lasers et en particulier du métal dans les lasers à vapeur métallique

De manière usuelle, la vapeur métallique est créée par la technique dite d'autochauffage de l'enceinte du laser. Cette technique est décrite dans l'article de T.C.Wang, Rev. Sci. Ins., Oct.89, p.3351152.

Des décharges électriques chauffent des billes de métal à haute température (1000 à 1500°C environ). Ces décharges électriques sont fournies, sous forme d'impulsions, par un module d'excitation électrique. Elles effectuent aussi un bombardement électronique du métal vaporisé, donnant lieu à l'excitation des atomes à savoir l'inversion de population permettant la génération d'un faisceau lumineux par émission stimulée. Le front d'une impulsion sert à l'excitation alors que la queue de cette impulsion opère le chauffage de l'enceinte pour l'excitation suivante. Excitation et chauffage sont donc couplés.

Le couplage entre l'excitation et le chauffage, réalisés par une même impulsion électrique, pose plusieurs problèmes. En particulier, le réglage du point de fonctionnement thermique du laser ne peut être modifié sans obligatoirement modifier l'excitation de la vapeur.

D'autre part, l'augmentation de dimensionnement d'un laser en vue de l'accroissement de sa puissance impose des énergies électriques plus importantes. Or, le respect de la brièveté des durées d'impulsion électrique est incompatible avec une augmentation de l'énergie fournie par les moyens mis en oeuvre aujourd'hui, comme des dispositifs à thyratrons de grande taille ou des interrupteurs à semi-conducteur associés à une compression magnétique.

On connaît un dispositif dans lequel le chauffage et l'excitation sont découplés. On en trouve par exemple une description dans l'article de B. Singh, "Compact externaly heated discharge tube for metal vapor laser" paru dans Rev. Sci. Inst., 55(10) Oct.84 p.1542-1544.

Dans cet article, une résistance chauffante enveloppe l'enceinte et permet ainsi la vaporisation du métal. Mais la distribution des températures à l'intérieur de l'enceinte obtenues avec ce chauffage externe n'est pas favorable au bon fonctionnement à haute fréquence du laser.

La présente invention a pour but de remédier à ces inconvénients. Pour cela, elle préconise un dispositif où l'excitation et le chauffage sont découplés mais obtenus tous deux par décharges électriques et donc de manière interne.

Plus précisément, l'invention a pour objet une source d'alimentation électrique pour laser, ce laser comprenant un matériau actif, la source d'alimentation comprenant un module d'excitation délivrant des impulsions électriques pour l'excitation du matériau actif, et comprenant en outre :

– un module de chauffage délivrant des impulsions électriques pour porter et maintenir le matériau actif à une température à laquelle se produit l'effet laser, après excitation du matériau,
– des moyens pour permettre le fonctionnement alterné et récurrent des modules d'excitation et de chauffage.

Selon un mode de réalisation, le module de chauffage est constitué par une source de courant impulsionnel, déclenchée extérieurement.

Selon un autre mode de réalisation, le module de chauffage comprend :

une source de tension possédant deux bornes A et B,

un condensateur connecté en parallèle aux bornes A et B de la source de tension,

un interrupteur connecté à la borne A de la source de tension,

une inductance saturable connectée en un point C à l'interrupteur.

Selon une variante de ce dernier mode de réalisation, le module de chauffage comprend en outre au moins un étage de compression magnétique comprenant un condensateur relié à une inductance saturable.

Avantageusement, les moyens pour permettre le fonctionnement alterné des modules d'excitation et de chauffage comprennent :

un filtre passe-haut connecté en parallèle en sortie du module d'excitation,

un filtre passe-bas connecté en parallèle en sortie du module de chauffage.

La source d'alimentation électrique peut comprendre des moyens d'amorçage pour amorcer le régime des décharges.

Dissocier chauffage et excitation permet d'avoir recours à des impulsions électriques d'excitation d'énergie moindre pour une même puissance lumineuse obtenue. De plus, cela permet d'avoir la maîtrise de ces deux paramètres (chauffage et excitation) indépendamment l'un de l'autre.

D'autre part, dissocier chauffage et excitation permet d'utiliser, pour créer les impulsions de chauffage, des dispositifs fonctionnant sous basse tension (environ 1000 V). Outre le fait que l'utilisation de haute tension (20 KV environ) est restreinte à l'excitation, la diminution des tensions mises en jeu permet d'éviter ou de réduire les oscillations amorties apparaissant dans ce type de laser et donc de permettre une meilleure absorption de l'énergie du module de chauffage disponible.

En effet, un module de chauffage ou d'excitation raccordé à l'enceinte contenant le matériau actif forme un circuit R-L-C. La valeur de l'inductance L est fixe et est dûe à la géométrie du circuit. L'énergie délivrée à l'enceinte pour le chauffage ou l'excitation est proportionnelle à C et à la tension appliquée au carré.

On sait que la résistance d'amortissement critique R est inversement proportionnelle à la racine de C. Pour le chauffage, un fonctionnement basse tension permet d'avoir une capacité de grande valeur, ce qui diminue la valeur de la résistance critique R du circuit et donc facilite l'amortissement des oscillations.

Les caractéristiques et avantages de l'invention apparaitront mieux après la description qui suit donnée à titre explicatif et nullement limitatif. Cette description se réfère à des dessins annexés dans lesquels :

   – la figure 1 représente schématiquement une vue générale d'un laser muni d'une source d'alimentation conforme à l'invention ;
   – la figure 2 représente schématiquement un mode de réalisation d'un module d'excitation ;
   – la figure 3 représente schématiquement un autre mode de réalisation connu d'un module d'excitation ;
   – la figure 4 représente schématiquement un chronogramme des impulsions d'excitation et de chauffage ;
   – la figure 5 représente schématiquement un mode de réalisation d'un module de chauffage conforme à l'invention ;
   – la figure 6 représente schématiquement une variante de réalisation d'un mode de chauffage conforme à l'invention ;
   – la figure 7 représente schématiquement un autre mode de réalisation d'un mode de chauffage conforme à l'invention.

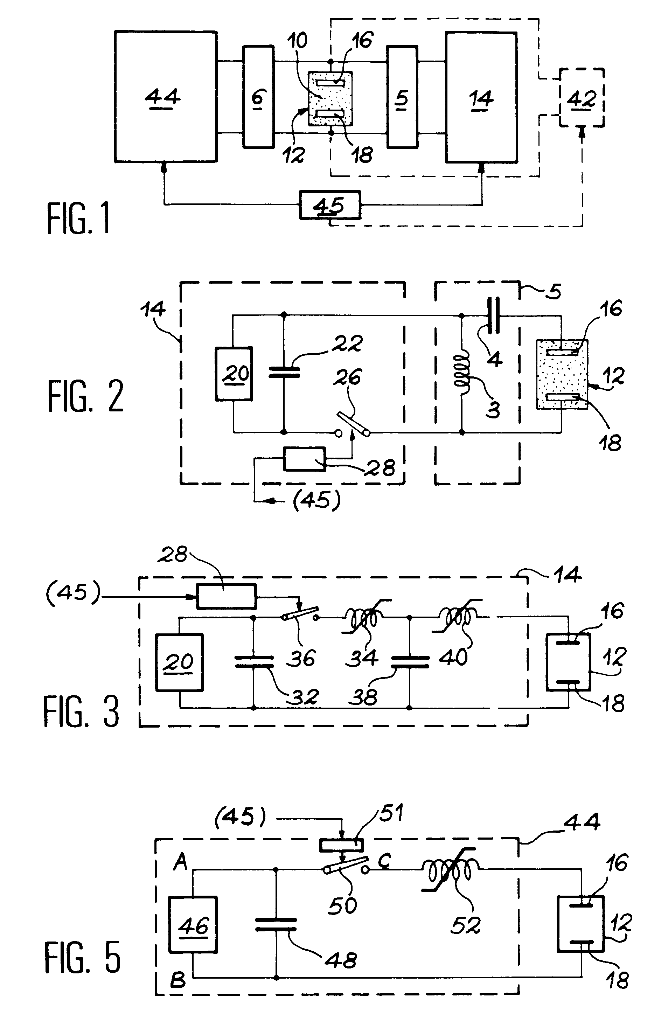

En référence à la figure 1, on décrit maintenant un laser à vapeur métallique muni d'une source d'alimentation conforme à l'invention. La vapeur métallique 10 est créée à l'intérieur d'une enceinte 12 par vaporisation de billes métalliques, non représentées.

Un module d'excitation 14 est connecté aux électrodes 16, 18. Il délivre, de manière récurrente, à une fréquence pouvant aller de quelques Hertz à plusieurs dizaines de kiloHertz, une impulsion de courant permettant l'excitation de la vapeur 10. De manière avantageuse, cette impulsion dure moins d'une centaine de nanosecondes et possède une intensité de crête de plus de 1000 A.

La vaporisation du métal est obtenue par application d'une impulsion électrique dans l'enceinte 12.

Cette impulsion électrique de chauffage est précédée d'un amorçage effectué par des moyens d'amorçage 42 qui sont constitués d'une source de haute tension impulsionnelle. Cette haute tension, de l'ordre de quelques dizaines de kilovolts, est appliquée pendant une durée pouvant aller de 0,1 à 10 microsecondes entre les électrodes 16 et 18.

L'amorçage permet de faire varier l'impédance interne de l'enceinte 12 d'une valeur quasi infinie à quelques Ohms.

Dans un mode de réalisation avantageux, les moyens d'amorçage sont confondus avec le module d'excitation et dans ce cas, l'impulsion électrique d'excitation sert à l'amorçage du milieu pour l'excitation suivante.

On applique ensuite l'impulsion de chauffage qui peut ainsi être engendrée par un système fonctionnant à basse tension.

Un module de chauffage 44 délivre, de manière récurrente et en relation temporelle avec l'amorçage une impulsion de chauffage.

Des moyens de commande 45 reliés aux modules d'excitation 14, de chauffage 44 et éventuellement aux moyens d'amorçage 42 délivrent des signaux de commande pour le déclenchement alterné de ces modules.

Des moyens 5 et 6 sont connectés d'une part aux électrodes 16 et 18 et d'autre part respectivement aux sorties du module d'excitation 14 et du module de chauffage 44. Ces moyens 5 et 6 permettent un fonctionnement alterné et récurrent des modules d'excitation 14 et de chauffage 44. Le moyen 5 peut être constitué par un filtre passe-haut alors que le moyen 6 peut être constitué par un filtre passe-bas.

On décrit maintenant des réalisations des différents modules d'excitation et de chauffage.

La figure 2 représente schématiquement un premier mode de réalisation d'un module d'excitation 14. Ce module comprend une source de tension 20 permettant la charge d'un condensateur 22 connecté en parallèle à la source de tension.

Un thyratron 26 est mis en conduction sous la commande d'un moyen de déclenchement 28, ce qui permet la décharge du condensateur 22 à travers le thyratron.

Sur la figure 2, on a aussi représenté le filtre passe-haut 5 qui est constitué d'une inductance 3 reliée à un condensateur 4.

La figure 3 représente schématiquement un second mode de réalisation d'un module d'excitation 14, d'un genre connu. Ce module comprend une source de tension 20 connectée à un premier étage de compression magnétique. Ce dernier est constitué par un condensateur 32 connecté en parallèle aux bornes de la source de tension 20 et relié à une inductance saturable 34 par l'intermédiaire d'un interrupteur 36 pouvant être de type semi-conducteur commandé par les moyens de déclenchement 28.

Lorsque l'interrupteur 36 est fermé, l'inductance saturable 34 agit comme un second interrupteur : avant la saturation, le courant traversant l'inductance est faible ; il croit brutalement à la saturation.

Le premier étage de compression magnétique est relié à un second étage de compression magnétique formé par le condensateur 38 et l'inductance saturable 40.

A saturation de l'inductance 34 du premier étage, le condensateur 38 se charge rapidement. La saturation de la seconde inductance 40 entraine une décharge rapide dans la tête laser 12 par l'intermédiaire du filtre passe-haut 5.

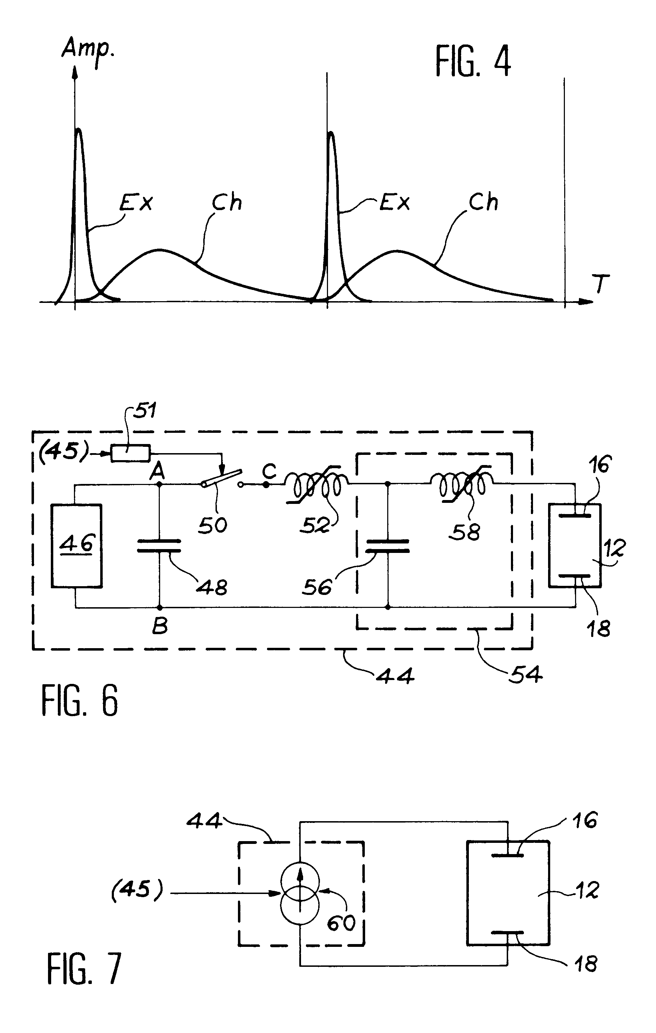

Dans cette réalisation, comme on peut le voir sur la figure 4 représentant schématiquement un chronogramme de l'amplitude (Amp) des impulsions électriques d'excitation Ex et de chauffage Ch, l'impulsion d'excitation Ex est aussi utilisée pour l'amorçage du milieu métallique en vue du chauffage. Le déclenchement de l'impulsion de chauffage Ch est commandé par les moyens 28 par exemple en synchronisme avec la valeur maximum de l'impulsion d'excitation Ex.

Les figures 5 à 7 représentent schématiquement des modes de réalisation d'un module de chauffage conforme à l'invention. Ce module 44 permet la délivrance d'impulsions de courant d'une centaine d'ampères et d'une durée de l'ordre de la dizaine de microsecondes.

Dans le mode de réalisation de la figure 5, le module 44 comprend un condensateur 48 connecté en parallèle aux bornes A et B d'une source de basse tension 46. La borne A de la source de basse tension est reliée à un interrupteur 50 relié en un point C à une inductance saturable 52, elle même connectée à l'électrode 16. L'autre borne B de la source d'alimentation est reliée à l'électrode 18.

Sous l'effet de la fermeture de l'interrupteur 50 déclenchée par les moyens de déclenchement 51, eux-mêmes commandés par les moyens de commande 45 (fig.1), le condensateur 48 se décharge, saturant l'inductance 52 et provoquant une impulsion de courant entre les électrodes 16 et 18.

L'inductance saturable 52 jouant le rôle d'interrupteur ouvert lorsqu'elle n'est pas saturée permet d'autre part, d'isoler le module de chauffage lors de la délivrance de l'impulsion d'excitation.

La figure 6 représente schématiquement une variante de réalisation du dispositif précédent (fig.5). Un étage de compression magnétique 54 est ajouté. Cet étage 54 est formé d'un condensateur 56 et d'une inductance saturable 58. Rajouter un étage de compression magnétique permet de réduire l'inductance du circuit donc de réduire la valeur de la résistance critique d'amortissement du circuit électrique. On obtient donc un meilleur transfert de l'énergie délivrée par le module de chauffage.

De plus, l'étage 54 forme un filtre passe-bas correspondant à des moyens 6 (fig.1) intégrés. Il assure donc le découplage entre les modules de chauffage et d'excitation.

Sur la figure 7, le module 44 est constitué d'une source de courant impulsionnel déclenchée extérieurement 60, en l'occurrence le déclenchement est commandé ici par les moyens de commande 45 (fig.1). Cette source de courant impulsionnel délivre une impulsion de courant à la valeur nominale demandée quelle que soit l'impédance de l'enceinte 12, ce qui permet de faire l'économie de l'amorçage. Elle peut être par exemple constituée par un convertisseur connu sous la terminologie anglosaxonne usuelle de "Flyback".

## Revendications

1. Source d'alimentation électrique pour laser, ce laser comprenant un matériau actif, la source d'alimentation comprenant un module d'excitation (14) délivrant des impulsions électriques pour l'excitation du matériau actif, caractérisée en ce qu'elle comprend en outre :
   – un module de chauffage (44) délivrant des impulsions électriques pour porter et maintenir le matériau actif à une température à laquelle se produit l'effet laser, après excitation du matériau,
   – des moyens (5, 6) pour permettre le fonctionnement alterné et récurrent des modules d'excitation et de chauffage.

2. Source d'alimentation électrique selon la revendication 1, caractérisée en ce que le module de chauffage (44) est constitué par une source de courant impulsionnel (60), déclenchée extérieurement.

3. Source d'alimentation électrique selon la revendication 1, caractérisée en ce que le module de chauffage (44) comprend :
   une source de tension (46) possédant deux bornes A et B,
   un condensateur (48) connecté en parallèle aux bornes A et B de la source de tension (46),
   un interrupteur (50) connecté à la borne A de la source de tension (46),
   une inductance saturable (52) connectée en un point C à l'interrupteur (50).

4. Source d'alimentation électrique selon la revendication 3, caractérisée en ce que le module de chauffage comprend en outre au moins un étage de compression magnétique (54) comprenant un condensateur (56) relié à une inductance saturable (58).

5. Source d'alimentation électrique selon la revendication 1, caractérisée en ce que les moyens pour permettre le fonctionnement alterné des modules d'excitation et de chauffage comprennent :
   un filtre passe-haut (5) connecté en sortie du module d'excitation,
   un filtre passe-bas (6) connecté en sortie du module de chauffage.

6. Source d'alimentation électrique selon la revendication 1, le matériau actif étant un métal, caractérisée en ce qu'elle comprend des moyens d'amorçage (42) pour amorcer la vaporisation du métal.

FIG. 1

FIG. 2

FIG. 3

FIG. 5

FIG. 4

FIG. 6

FIG. 7

EP 0 497 684 A1

**Office européen des brevets**

# RAPPORT DE RECHERCHE EUROPEENNE

Numero de la demande

EP  92 40 0213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-9 003 674 (CEA)<br>* abrégé; figures 1-3 *<br>* page 10, ligne 12 - page 10, ligne 35 * | 1,2,6 | H01S3/03 |
| Y | | 4 | |
| | --- | | |
| Y | SOVIET JOURNAL OF QUANTUM ELECTRONICS<br>vol. 20, no. 1, Janvier 1990,<br>pages 20 - 23;<br>N.A.LYABIN ET AL.: 'ACTIVE ELEMENT UTILIZING COPPER VAPOR FOR HIGH-POWER MASTER-OSCILLATOR-AMPLIFIER LASER SYSTEMS'<br>"APPARATUS"<br>* alinéa 1; figure 1 * | 4 | |
| | --- | | |
| X | JOURNAL OF PHYSICS E/SCIENTIFIC INSTRUMENTS<br>vol. 21, no. 4, Avril 1988,<br>pages 388 - 392;<br>J.K.MITTAL ET AL.: 'DESIGN AND PERFORMANCE OF A 20 WATT COPPER VAPOUR LASER'<br>"POWER CONDITIONING SYSTEM"<br>* alinéa 3 * | 1,2,6 | |

**DOMAINES TECHNIQUES RECHERCHES (Int. Cl.5)**

H01S

Le présent rapport a été établi pour toutes les revendications

| Lieu de la recherche | Date d'achèvement de la recherche | Examinateur |
|---|---|---|
| LA HAYE | 02 MARS 1992 | MALIC K. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)